(19) Europäisches Patentamt
European Patent Office
Office européen des brevets

(11) EP 3 550 689 A1

(12) EUROPEAN PATENT APPLICATION
published in accordance with Art. 153(4) EPC

(43) Date of publication:
09.10.2019 Bulletin 2019/41

(51) Int Cl.:
H02J 1/00 (2006.01)        H02J 3/38 (2006.01)
H02J 3/32 (2006.01)

(21) Application number: 17877755.3

(22) Date of filing: 24.04.2017

(86) International application number:
PCT/CN2017/081705

(87) International publication number:
WO 2018/103251 (14.06.2018 Gazette 2018/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 05.12.2016 CN 201611100747

(71) Applicant: Gree Electric Appliances, Inc. of Zhuhai
Zhuhai, Guangdong 519070 (CN)

(72) Inventors:
• TANG, Wenqiang
  Zhuhai
  Guangdong 519070 (CN)
• NAN, Shugong
  Zhuhai
  Guangdong 519070 (CN)
• HUANG, Meng
  Zhuhai
  Guangdong 519070 (CN)

(74) Representative: Lavoix
Bayerstrasse 83
80335 München (DE)

(54) CONTROL DEVICE AND CONTROL METHOD FOR DIRECT-CURRENT MICRO-GRID, AND DIRECT CURRENT MICRO-GRID SYSTEM

(57) The present invention provides a control device for a direct-current (DC) microgrid and a control method thereof, and a DC microgrid system. The control device of a DC microgrid comprises a detection module configured for detecting a voltage change rate of the DC bus, and a regulation module configured for regulating energy compensation by the energy compensation means to the DC bus based on the voltage change rate of the DC bus that is detected by the detection module. In the control device for a DC microgrid provided by the present invention, the detection module detects in real time the condition of voltage change of the DC bus, and the control module regulates in real time the energy compensation by the energy compensation means to the DC bus based on the result detected by the detection module, such that stability of voltage of the DC bus is increased, and the DC microgrid can be operated stably.

Fig. 1

**Description**

**RELATED APPLICATION**

The present application claims a priority from the Chinese patent application under the application number 201611100747.X that is entitled "CONTROL DEVICE FOR DC MICROGRID AND CONTROL METHOD THEREOF, DC MICROGRID SYSTEM", which is cited here in full text for reference.

**TECHNICAL FIELD**

The present invention relates to the technical field of microgrid, and in particular to a control device for a direct-current (DC) microgrid and a control method thereof, and a DC microgrid system.

**BACKGROUND ART**

With rapid development and wide application of distributed energy source, application of a microgrid technology based on new energy source is also developed rapidly. The direct-current (DC) microgrid has become focus of searches and applications due to its own advantages, and promotes household power to develop in the DC direction which has a higher efficiency of new energy source utilization.

In a traditional grid distribution system, power flows in a single direction from a power generation terminal to a power consuming terminal, and a microgrid system have multiple operation modes. In a microgrid system based on the utilization of new energy source, energy interaction may exist among distributed energy sources, an external grid, a load and energy storage elements. For a DC microgrid system, a DC bus is an intermediate for exchanging the energy of the system. Each unit of the DC microgrid system accesses to the DC bus via electric and electronic current transformer, and exchange energy via the DC bus. The voltage condition of the DC bus would directly affect the stability of operation of the system. Thus, how to stabilize the voltage of the DC bus is a problem that is to be solved at present.

**CONTENTS OF THE INVENTION**

In view of the above conditions, a main object of the present invention is to provide a control device for a DC microgrid and a control method thereof, and a DC microgrid system, which would increase stability of the voltage of the DC bus in the DC microgrid.

In order to solve the technical problem above, the technical solution of the present invention provides a control device for a direct-current (DC) microgrid which comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load, the control device comprising: a detection module, configured for detecting a voltage change rate of the DC bus; and a regulation module, configured for regulating the compensating by the energy compensation means to the DC bus based on the voltage change rate of the DC bus that is detected by the detection module.

In some embodiments, the detection module comprises: a detection unit, configured for detecting a current at an access point for accessing to the load on the DC bus, a current at an access point for accessing to the power generation means on the DC bus and a current at an access point for accessing to the energy compensation means on the DC bus; and a calculation unit, configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

In order to solve the technical problem above, the technical solution of the present invention further provides a control method for a direct-current (DC) microgrid which comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load, the method comprising: detecting, by a detection module, a voltage change rate of the DC bus; and regulating, by a regulation module, the compensating by the energy compensation means to the DC bus based on the voltage change rate of the DC bus that is detected by the detection module.

In some embodiments, the detecting comprises: detecting, by the detection module, a current at an access point for accessing to the load on the DC bus, a current at an access point for accessing to the power generation means on the DC bus and a current at an access point for accessing to the energy compensation means on the DC bus; and calculating, by the detection module, a voltage change rate of the DC bus based on the current at the access point for accessing to the load on the DC bus, the current at the access point for accessing to the power generation means on the DC bus and the current at the access point for accessing to the energy compensation means on the DC bus.

In order to solve the technical problem above, the present invention further provides a direct-current (DC) microgrid system, comprising a DC microgrid and a control device, wherein: the DC microgrid comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load; and the control device comprising: a detection module, configured for detecting a voltage change rate of on the DC bus; and a regulation module, configured for regulating the compensating by the energy compensation means to the DC bus based on the voltage change rate of the DC bus that is detected by the detection module.

In some embodiments, the detection module comprises: a detection unit, configured for detecting a current at an access point for accessing to the load on the DC bus, a current at an access point for accessing to the power generation means on the DC bus and a current at an access point for accessing to the energy compensation means on the DC bus; and a calculation unit, configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

In some embodiments, the energy compensation means comprises at least one of an energy storage battery and a grid interconnection means configured for connecting with an external grid.

In some embodiments, the energy storage battery is accessed to the DC bus via a DC/DC current transformer, and the grid interconnection means is accessed to the DC bus via a DC/AC current transformer.

In some embodiments, the power generation means comprises at least one of wind power generation means and photovoltaic power generation means.

In some embodiments, the wind power generation means is accessed to the DC bus via an AC/DC current transformer, and the photovoltaic power generation means is accessed to the DC bus via a DC/AC current transformer.

In the control device for a DC microgrid provided by the present invention, the detection module detects in real time the condition of voltage change of the DC bus, and the control module regulates in real time the compensating by the energy compensation means to the DC bus based on the result detected by the detection module, such that stability of voltage of the DC bus is increased, and the DC microgrid can be operated stably.

## DESCRIPTION OF THE DRAWINGS

The present invention is described with reference to the following drawings. Among the drawings:

Fig. 1 is a schematic diagram showing a control device of a DC microgrid provided according to the embodiment of the present invention;
Fig. 2 is a schematic diagram showing control of a DC microgrid by a control device of the DC microgrid provided according to the embodiment of the present invention;
Figs. 3-5 are schematic diagrams showing operation states of the DC microgrid as shown in Fig. 2;
Fig. 6 is another schematic diagram showing control of a DC microgrid by the control device of the DC microgrid provided according to the embodiment of the present invention;
Fig. 7 is a schematic diagram showing operation states of the DC microgrid as shown in Fig. 6.

## EMBODIMENTS

The specified embodiment of the present invention will be further described in detail below in conjunction with the accompanying drawings and embodiments. The following examples are used to demonstrate the present invention, but shall not limit the scope of the present invention.

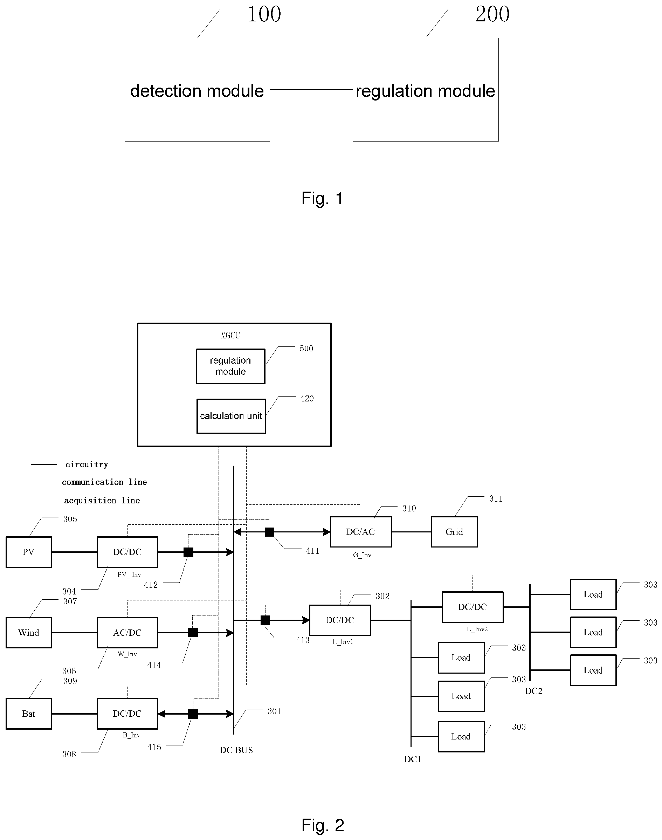

Referring to Fig. 1, which is a schematic diagram showing a control device of a DC microgrid provided by the embodiment of the present invention. The DC microgrid comprises a DC bus, a load accessed to the DC bus, a power generation means accessed to the DC bus, and an energy compensation means accessed to the DC bus. The energy compensation means is used for compensating energy for the DC bus. The energy compensation comprises the DC bus supplying power to the energy compensation means when the power generated by the power generation means is greater than that desired by the load, and the energy compensation means supplying power to the DC bus when the power generated by the power generation means is smaller than that desired by the load. The control device comprises a detection module 100 and a regulation module 200.

The detection module 100 is configured for detecting a voltage change rate of the DC bus.

The regulation module 200 is configured for regulating the energy compensation by the energy compensation means to the DC bus based on the voltage change rate of the DC bus that is detected by the detection module.

In the control device of a DC microgrid provided by the embodiment of the present invention, the detection module detects in real time the change of voltage of the DC bus, and the control module regulates in real time the energy compensation by the energy compensation means to the DC bus based on the result detected by the detection module. The stability of voltage of the DC bus is increased, and the DC microgrid can be operated stably.

For example, the detection module 100 may comprises a detection unit and a calculation unit.

The detection unit is configured for detecting a current at an access point for accessing to the load on the DC bus, a current at an access point for accessing to the power generation means on the DC bus and a current at an access point for accessing to the energy compensation means on the DC bus.

The calculation unit is configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

For example, referring to Fig. 2, the DC microgrid above may be an interconnection type DC microgrid. The interconnection type DC microgrid comprises a direct-current bus (DC BUS) 301, a load (Load) 303 accessed to the DC bus 301 via a DC/DC current transformer 302, a power generation means accessed to the DC bus 301, and a energy compensator accessed to the DC bus.

The power generation means may be a distributed energy source means, and may specifically comprises photovoltaic power generation means (PV) 305 accessing the DC bus 301 via a DC/DC current transformer 304, and/or wind power generation means (Wind) 307 accessing the DC bus 301 via an AC/DC current transformer 306.

The energy compensation means may specifically comprises a storage battery (Bat) 309 accessed to the DC bus 301 via a DC/DC current transformer 308, and/or grid interconnection means (Grid) 311 accessed to the DC bus via a DC/AC current transformer 310. The energy compensation means is configured for compensating energy for the DC bus 301. The DC bus 301 may supply the power to the energy generation means when the power generated by the power generation means (such as a sum of the powers generated by the photovoltaic power generation means and the wind power generation means or only one of them) is greater than that desired by the load. The energy compensator may supply the power to the DC bus 301 when the power generated by the power generation means (such as a sum of the powers generated by the photovoltaic power generation means 305 and the wind power generation means 307 or only one of them) is smaller than that desired by the load.

In some embodiments, the grid interconnection means in the interconnection type DC microgrid above may be, for example, a municipal power grid system. The municipal grid is used as a stable compensation energy source to suppress output fluctuations and load fluctuations of the power generation means (for example, various new energy power generation means, such as photovoltaic and wind power generation means), thereby ensuring a stable voltage of the DC bus and stable operation of the system. In the interconnection type DC microgrid, the municipal grid as a main factor for stable operation of the system ensures a stable voltage of the bus, while the energy storage battery is responsive only to an optimization scheduling strategy of an upper system.

The control device of an interconnection type DC microgrid above comprises a detection module and a regulation module 500. The detection module is configured for detecting a voltage change rate of the DC bus, and the regulation module 500 is configured for regulating the energy compensation by the energy compensation means to the DC bus based on the voltage change rate of the DC bus that is detected by the detection module.

As shown in Fig. 2, the detection module may comprises a detection unit and a calculation unit 420. The detection unit comprises a DC current detector 411, a current detector 412, a current detector 413, a current detector 414, a current detector 415 and a calculation unit 420.

The DC current detector 411 is configured for detecting a current at an access point for accessing to the grid interconnection means 311 on the DC bus 301.

The current detector 412 is configured for detecting a current at an access point for accessing to the photovoltaic power generation means 305 on the DC bus 301.

The current detector 413 is configured for detecting a current at an access point for accessing to the load 303 on the DC bus 301.

The current detector 414 is configured for detecting a current at an access point for accessing to the wind power generation means 307 on the DC bus 301.

The current detector 415 is configured for detecting a current at an access point for accessing to the energy storage battery 309 on the DC bus 301.

The calculation unit 420 is configured for calculating a voltage change rate of the DC bus based on the currents detected by the each current detector in the detection unit.

In the interconnection type DC microgrid above, the DC bus 301 is an intermediate for energy exchange in the grid system, and powers of the each part in the system shall be in a balanced state:

$$P_1 + P_2 + P_4 + P_5 = P_3$$

Wherein, $P_1$ is a power at the access point for accessing to the grid interconnection device 311 on the DC bus 301 ($P_1$ is positive means the external grid supplies power to the DC bus via the grid interconnection means 311, and $P_1$ is negative means the DC bus supplies power to the external grid via the grid interconnection means 311). $P_2$ is an output power of the photovoltaic power generation means. $P_3$ is a power of the load. $P_4$ is an output power of the wind power generation means. $P_5$ is a power at the access point for accessing to the energy storage battery 309 on the DC bus 301 ($P_5$ is positive means the energy storage battery 309 discharges for the DC bus 301, and $P_5$ is negative means the DC bus charges the energy storage battery 309).

For a DC microgrid, a voltage of the DC bus is an important factor to assess power balance of the system. In the interconnection type DC microgrid above, each branch is capacitive decoupled by the DC bus. The relation between the voltage of the DC bus and the each branch may be represented as:

$$C_{dc} \frac{\mathrm{d}u_{dc}}{\mathrm{d}t} = (i_1 + i_2 + i_4 + i_5) - i_3$$

Wherein, $C_{dc}$ is a capacitance of the DC bus, $U_{dc}$ is a voltage of the DC bus.ii is a current at the access point for accessing to the grid interconnection means 311 on the DC bus 301 (ii is positive means the external grid supplies power to the DC bus via the grid interconnection means 311, and ii is negative means the DC bus supplies power to the external grid via the grid interconnection means 311). $i_2$ is a current at the access point for accessing to the photovoltaic power generation means 305 on the DC bus 301. $i_3$ is a current at the access point for accessing to the load 303 on the DC bus 301. $i_4$ is a current at an access point for accessing to the wind power generation means 307 on the DC bus 301. is is a current at the access point for accessing to the energy storage battery 309 on the DC bus 301 (is is positive means the energy storage battery 309 discharges for the DC bus 301, and is is negative means the DC bus charges the energy storage battery 309). Hence, based on the formula above, the calculation unit 420 may calculate a voltage change rate of the DC bus.

In the embodiments of the present invention, the calculation unit 420 and the regulation module 500 of the control device above may be provided in a microgrid control center 10 (MGCC) of the DC microgrid. The microgrid control center 10 is connected to the DC/DC current transformer 302, the DC/DC current transformer 304, the AC/DC current transformer 306, the DC/DC current transformer 308 and the DC/AC current transformer 310 to control the each branch of the grid, thereby to control and to coordinate operation of the whole system.

The DC/AC current transformer 310 may employ a manner of Four- quadrant rectification control, which may enable energy to flow bi-directionally. The MGCC 10 may transmit a control signal to the DC/AC current transformer 310 based on the voltage change rate of the DC bus, to enable the DC/AC current transformer 310 to determine a direction in which the energy flows, such that energy input and output conditions of the external grid can be controlled in real time to keep voltage of the DC bus stable.

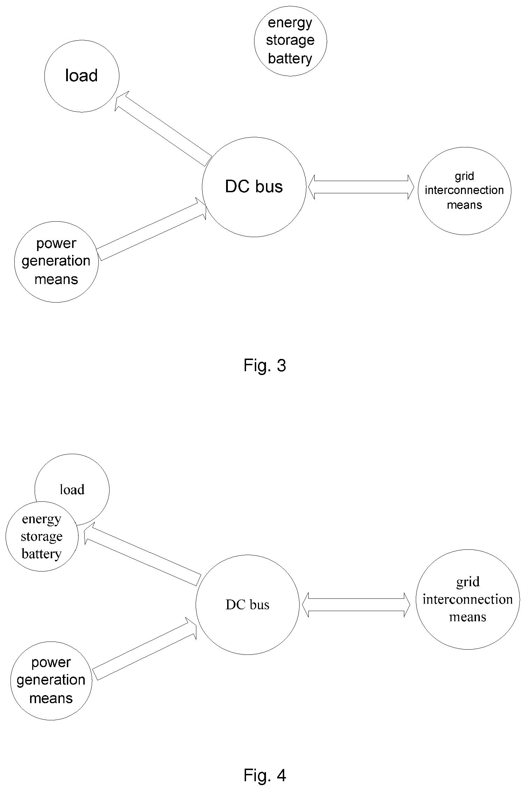

For example, in the interconnection type DC microgrid above, the microgrid control center 10 (MGCC) may control the grid interconnection means 311 to be in an operation state and the energy storage battery 309 to be in a standby state. At this time, in the DC microgrid system, as shown in Fig. 3, the load, the power generation means and the grid interconnection means exchange energy source via the DC bus. There are five basic operation modes as shown in Table 1 (except for a system stop state). At this time, by regulating the energy compensation by the interconnection means to the DC bus, the control device may employ the external grid of the grid interconnection means 311 as a stable compensation energy source to suppress output fluctuations and load fluctuations of the power generation means, thereby ensuring stable voltage of the DC bus and stable operation of the system.

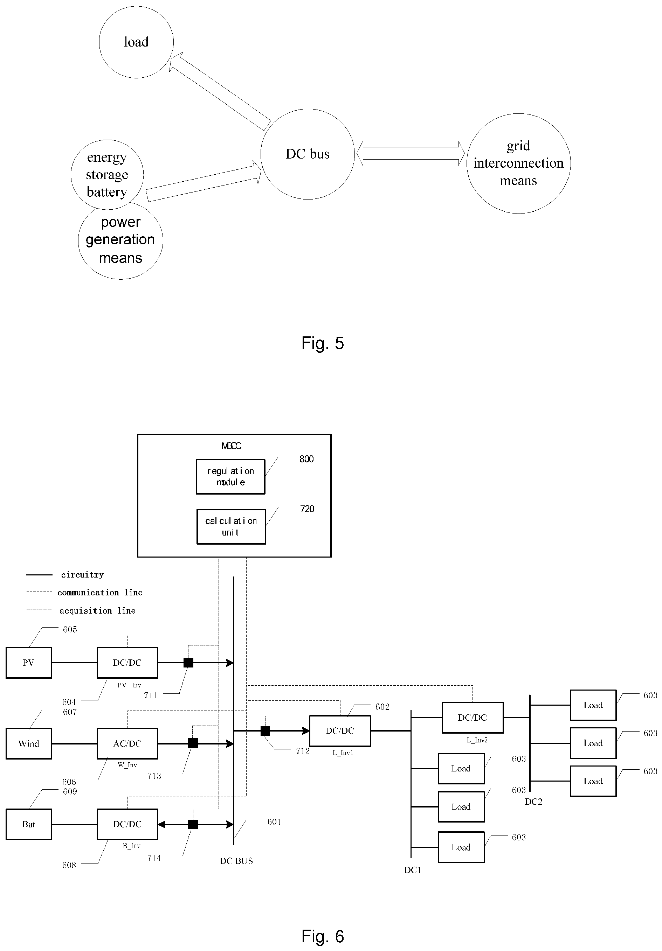

In addition, the MGCC 10 may cause the energy storage battery 309 to participate in the system energy exchange according to a corresponding control strategy. For example, the energy storage battery may be regarded as a load of the system when the MGCC 10 controls charging of the energy storage battery, and the operation state of the system is as shown in Fig. 4.The energy storage battery may be regarded as power generation means of the system when the MGCC 10 controls discharging of the energy storage battery, and the operation state of the system is as shown in Fig. 5.

Table 1

| Serial number | Interpretation on the system state |
|---|---|
| 1 | System stop |
| 2 | Grid Interconnection means → load |
| 3 | Power generation means → grid interconnection means |
| 4 | Power generation means → load + grid interconnection means |
| 5 | Power generation means → load |
| 6 | Power generation means + grid interconnection means → load |

In addition, referring to Fig. 6, the DC microgrid in the present invention may be an off-grid type DC microgrid, the off-grid type DC microgrid comprises a DC bus (DC BUS) 601, a load (Load) 603 accessed to the DC bus 601 via a DC/DC current transformer 602, a power generation means accessed to the DC bus, and an energy compensation means accessed to the DC bus.

The power generation means may be a distributed energy source means, and may specifically comprises photovoltaic power generation means (PV) 605 accessing the DC bus 601 via a DC/DC current transformer 604, and/or wind power generation means (Wind) 607 accessing the DC bus 601 via an AC/DC current transformer 606.

The energy compensation means may specifically comprises a storage battery (Bat) 609 accessed to the DC bus 601 via a DC/DC current transformer 608, the storage battery 609 is configured for compensating energy for the DC bus 601. The DC bus 601 may supply the power to the energy storage battery 609 when the power generated by the power generation means (such as a sum of the powers generated by the photovoltaic power generation means and the wind power generation means or only one of them) is greater than that desired by the load, . The energy storage battery 609 may supply the power to the DC bus 601 when the power generated by the power generation means (that is, a sum of the powers generated by the photovoltaic power generation means 605 and the wind power generation means 607 or only one of them) is smaller than that desired by the load 603,.

The control device of an off-grid type DC microgrid above comprises a detection module and a regulation module 800. The detection module is configured for detecting a voltage change rate of the DC bus, and the regulation module 800 is configured for regulating the energy compensation by the energy compensation means to the DC bus based on the voltage change rate of the DC bus that is detected by the detection module.

As shown in Fig. 6, the detection module may comprises a detection unit and a calculation unit 720, the detection unit comprises a current detector 711, a current detector 712, a current detector 713, a current detector 714 and a control module 720.

The current detector 711 is configured for detecting a current at an access point for accessing to the photovoltaic power generation means 605 on the DC bus 601.

The current detector 712 is configured for detecting a current at an access point for accessing to the load 603 on the DC bus 601.

The current detector 713 is configured for detecting a current at an access point for accessing to the wind power generation means 607 on the DC bus 601.

The current detector 714 is configured for detecting a current at an access point for accessing to the energy storage battery 609 on the DC bus 601.

The control module 720 is configured for calculating a voltage change rate of the DC bus based on the currents detected by the each current detector in the detection unit.

In the embodiments of the present invention, the calculation unit 720 and the regulation module 800 of the control device above may be provided in a microgrid control center 20 (MGCC) of the DC microgrid. The microgrid control center 20 is connected to the DC/DC current transformer 602, the DC/DC current transformer 604, the AC/DC current transformer 606 and the DC/DC current transformer 608 to control the each branch of the grid, thereby to controll and to coordinate operation of the whole system.

The DC/DC current transformer 608 may employ a manner of Boost/Buck charge and discharge control. The MGCC 20 may transmit a control signal to the DC/DC current transformer 608 based on the voltage change rate of the DC bus, to enable the DC/DC current transformer 608 to determine a direction in which the energy flows, such that energy input and output conditions of the energy storage battery 609 can be controlled in real time to keep voltage of the DC bus stable.

EP 3 550 689 A1

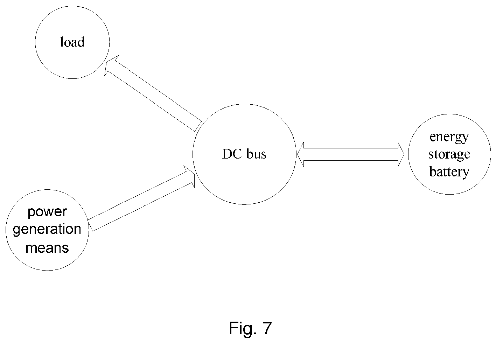

In the off-grid type DC microgrid above, the energy storage battery acts as a main factor for stable operation of the system. As shown in Fig. 7, the load, the power generation means and the energy storage battery exchange energy source via the DC bus. There are five basic operation modes a shown in Fig. 2 (except for the system stop state).

Table 2

| Serial number | Interpretation on the state |
|---|---|
| 1 | System stop |
| 2 | Energy storage battery → load |
| 3 | Power generation means → energy storage battery |
| 4 | Power generation means → load + energy storage battery |
| 5 | Power generation means → load |
| 6 | Power generation means + energy storage battery → load |

In the embodiment above, the detection module detects in real time the condition of voltage change of the DC bus, and the control module regulates in real time the energy compensation by the energy storage battery to the DC bus based on the result detected by the detection module, such that stability of voltage of the DC bus is increased to ensure real-time balance of the system power.

In addition, for the off-grid type microgrid system above, the energy storage battery cannot supply the power to the DC bus or obtain power from the DC bus without limitations like an external grid. Accordingly, not only power balance but also energy balance shall be taken into consideration for the off-grid type DC microgrid. A state of energy balance is closely associated with capacity ratio of the each unit in the system, and different capacity ratio exhibit different characteristics in operation.

The DC microgrid system according to the present invention can enable distributed energy source nearby to be used. The DC load utilizes DC power directly to increase power generation utilization of distributed energy source.

The DC microgrid system according to the present invention performs diversified current exchange based on a DC bus. Energy exchange among the units is performed by the DC bus. In an interconnection state, the grid ensures a stable voltage of the DC bus, and in an off-grid state, the energy storage battery ensures a stable voltage on the DC bus, thereby ensuring stable operation of the whole system.

In addition, the embodiment of the present invention further provides a control method for a direct-current (DC) microgrid. The DC microgrid comprises a DC bus, a load accessed to the DC bus, a power generation means accessed to the DC bus, and an energy compensation means accessed to the DC bus. The energy compensation means is used for compensating energy for the DC bus. The compensating comprises the DC bus supplying power to the energy compensation means when the power generated by the power generation means is greater than that desired by the load, and the energy compensation means supplying power to the DC bus when the power generated by the power generation means is smaller than that desired by the load. The method comprises the following steps.

S1: detecting a voltage change rate of the DC bus.

S2: regulating, by a regulation module, the energy compensation by the energy compensation means to the DC bus based on the voltage change rate of the DC bus that is detected by the detection module.

In some embodiments, the step S1 comprises the following steps.

S11: detecting, by the detection module, a current at an access point for accessing to the load on the DC bus, a current at an access point for accessing to the power generation means on the DC bus and a current at an access point for accessing to the energy compensation means on the DC bus.

S12: calculating, by the detection module, a voltage change rate of the DC bus based on the current at the access point for accessing to the load on the DC bus, the current at the access point for accessing to the power generation means on the DC bus and the current at the access point for accessing to the energy compensation means on the DC bus.

In addition, the embodiment of the present invention further provides a direct-current (DC) microgrid system. The DC microgrid system comprises a DC microgrid and a control device.

The DC microgrid comprises a DC bus, a load connected to the DC bus, a power generation means connected to the DC bus, and an energy compensation means connected to the DC bus. The energy compensation means is used for compensating energy for the DC bus. The compensating includes the DC bus supplying power to the energy compensation means when the power generated by the power generation means is greater than that desired by the load, and the energy compensation means supplying power to the DC bus when the power generated by the power generation means is smaller than that desired by the load.

The control device comprises a detection module and a regulation module.

The detection module is configured for detecting a voltage change rate of on the DC bus.

The regulation module is configured for modulating the energy compensation by the energy compensation means to the DC bus based on the voltage change rate of the DC bus that is detected by the detection module.

In some embodiments, the detection module comprises a detection unit and a calculation unit.

The detection unit is configured for detecting a current at an access point for accessing to the load on the DC bus, a current at an access point for accessing to the power generation means on the DC bus and a current at an access point for accessing to the energy compensation means on the DC bus.

The calculation unit is configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

In some embodiments, the energy compensation means comprises at least one of an energy storage battery and a grid interconnection means configured for connecting with an external grid. For example, the energy storage battery may be accessed to the DC bus via a DC/DC current transformer, and the grid interconnection means may be accessed to the DC bus via a DC/AC current transformer.

In some embodiments, the power generation means comprises at least one of wind power generation means and photovoltaic power generation means. For example, the wind power generation means is accessed to the DC bus via an AC/DC current transformer, and the photovoltaic power generation means is accessed to the DC bus via a DC/DC current transformer.

It can be easily understood by those skilled in the art that without conflictions, the above preferred solutions may be combined and added freely.

It shall be understood that said embodiments are only illustrative but not limitative. Without departing from basic principles of the present invention, those skilled in the art may make various obvious or equivalent modifications or replacements to the details, which will all be included in the scope of the claims of the present invention.

**Claims**

1. A control device for a direct-current (DC) microgrid which comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load, the control device comprising:

   a detection module, configured for detecting a voltage change rate of the DC bus; and
   a regulation module, configured for regulating the compensating by the energy compensation means to the DC bus based on the voltage change rate of the DC bus that is detected by the detection module.

2. The control device according to claim 1, wherein the detection module comprises:

   a detection unit, configured for detecting a current at an access point for accessing to the load on the DC bus, a current at an access point for accessing to the power generation means on the DC bus and a current at an access point for accessing to the energy compensation means on the DC bus; and
   a calculation unit, configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

3. A control method for a direct-current (DC) microgrid which comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load, the method comprising:

detecting, by a detection module, a voltage change rate of the DC bus; and

regulating, by a regulation module, the compensating by the energy compensation means to the DC bus based on the voltage change rate of the DC bus that is detected by the detection module.

4. The control method according to claim 3, wherein the detecting comprises:

detecting, by the detection module, a current at an access point for accessing to the load on the DC bus, a current at an access point for accessing to the power generation means on the DC bus and a current at an access point for accessing to the energy compensation means on the DC bus; and

calculating, by the detection module, a voltage change rate of the DC bus based on the current at the access point for accessing to the load on the DC bus, the current at the access point for accessing to the power generation means on the DC bus and the current at the access point for accessing to the energy compensation means on the DC bus.

5. A direct-current (DC) microgrid system, comprising a DC microgrid and a control device, wherein:

the DC microgrid comprises a DC bus, a load accessed to the DC bus, a power generation means accessed to the DC bus, and an energy compensation means accessed to the DC bus, the energy compensation means being used for compensating energy for the DC bus, wherein the compensating comprises the DC bus supplying power to the energy compensation means when the power generated by the power generation means is greater than that desired by the load, and the energy compensation means supplying power to the DC bus when the power generated by the power generation means is smaller than that desired by the load; and

the control device comprising:

a detection module, configured for detecting a voltage change rate of on the DC bus; and

a regulation module, configured for regulating the compensating by the energy compensation means to the DC bus based on the voltage change rate of the DC bus that is detected by the detection module.

6. The DC microgrid system according to claim 5, wherein the detection module comprises:

a detection unit, configured for detecting a current at an access point for accessing to the load on the DC bus, a current at an access point for accessing to the power generation means on the DC bus and a current at an access point for accessing to the energy compensation means on the DC bus; and

a calculation unit, configured for calculating a voltage change rate of the DC bus based on the current at the access point for accessing to the load on the DC bus, the current at the access point for accessing to the power generation means on the DC bus and the current at the access point for accessing to the energy compensation means on the DC bus that are detected by the detection unit.

7. The DC microgrid system according to claim 5, wherein the energy compensation means comprises at least one of an energy storage battery and a grid interconnection means configured for connecting with an external grid.

8. The DC microgrid system according to claim 7, wherein the energy storage battery is accessed to the DC bus via a DC/DC current transformer, and the grid interconnection means is accessed to the DC bus via a DC/AC current transformer.

9. The DC microgrid system according to claim 5, wherein the power generation means comprises at least one of wind power generation means and photovoltaic power generation means.

10. The DC microgrid system according to claim 9, wherein the wind power generation means is accessed to the DC bus via an AC/DC current transformer, and the photovoltaic power generation means is accessed to the DC bus via a DC/DC current transformer.

100

200

| detection module | regulation module |

Fig. 1

MGCC

regulation module — 500

calculation unit — 420

—— circuitry
------ communication line
—·—· acquisition line

305

PV — 305

DC/DC — PV_Inv

412

304
307

Wind — 307

AC/DC — W_Inv

414

306
309

Bat — 309

DC/DC — B_Inv

308

415

DC BUS — 301

411

DC/AC — G_Inv — 310

Grid — 311

413

DC/DC — L_Inv1 — 302

DC/DC — L_Inv2 — 302

Load — 303
Load — 303
Load — 303

DC2

Load — 303
Load — 303
Load — 303

DC1

Fig. 2

Fig. 3

Fig. 4

Fig. 5

Fig. 6

Fig. 7

# INTERNATIONAL SEARCH REPORT

| International application No. |
| --- |
| PCT/CN2017/081705 |

**A. CLASSIFICATION OF SUBJECT MATTER**

H02J 1/00 (2006.01) i; H02J 3/38 (2006.01) i; H02J 3/32 (2006.01) i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, CNKI, VEN: 直流微网, 直流微电网, 检测, 测量, 能量, 功率, 补偿, 电压, 电流; DC, direct current, micro, grid, detect, measure, power, energy, compensate, equalize, current, pressure, voltage

**C. DOCUMENTS CONSIDERED TO BE RELEVANT**

| Category* | Citation of document, with indication, where appropriate, of the relevant passages | Relevant to claim No. |
| --- | --- | --- |
| E | CN 206250767 U (ZHUHAI GREE ELECTRIC CO., LTD.) 13 June 2017 (13.06.2017), entire document | 1-10 |
| X | CN 103515952 A (TIANJIN UNIVERSITY) 15 January 2014 (15.01.2014), claim 1, description, paragraphs [0002] and [0041]-[0044], and figures 1-3 | 1-6 |
| Y | CN 103515952 A (TIANJIN UNIVERSITY) 15 January 2014 (15.01.2014), claim 1, description, paragraphs [0002] and [0041]-[0044], and figures 1-3 | 7-10 |
| Y | CN 203722319 U (NORTH CHINA ELECTRIC POWER UNIVERSITY (BAODING)) 16 July 2014 (16.07.2014) description, paragraphs [0021]-[0023], and figures 1 and 2 | 7-10 |
| Y | CN 105634025 A (JIANGSU LVYANG ELECTRONIC INSTRUMENT GROUP CO., LTD.) 01 June 2016 (01.06.2016), description, paragraphs [0019]-[0022], and figure 1 | 7-10 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 August 2017 | 08 September 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>DUAN, Manyin<br><br>Telephone No. (86-10) 62411759 |

Form PCT/ISA /210 (second sheet) (July 2009)

## INTERNATIONAL SEARCH REPORT

| International application No. |
| --- |
| PCT/CN2017/081705 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | WO 2014089567 A4 (NUEVO POWER INC.) 30 October 2014 (30.10.2014), entire document | 1-10 |

Form PCT/ISA /210 (continuation of second sheet) (July 2009)

## INTERNATIONAL SEARCH REPORT
### Information on patent family members

| | International application No. |
|---|---|
| | PCT/CN2017/081705 |

| Patent Documents referred in the Report | Publication Date | Patent Family | Publication Date |
|---|---|---|---|
| CN 206250767 U | 13 June 2017 | None | |
| CN 103515952 A | 15 January 2014 | CN 103515952 B | 19 August 2015 |
| CN 203722319 U | 16 July 2014 | None | |
| CN 105634025 A | 01 June 2016 | None | |
| WO 2014089567 A4 | 30 October 2014 | WO 2014089567 A2 | 12 June 2014 |
| | | WO 2014089567 A3 | 28 August 2014 |
| | | US 2015311721 A1 | 29 October 2015 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201611100747 X